(19) **Europäisches Patentamt**

**European Patent Office**

**Office européen des brevets**

(11) **EP 1 490 153 B1**

(12) **FASCICULE DE BREVET EUROPEEN**

(45) Date de publication et mention
de la délivrance du brevet:
**04.01.2006 Bulletin 2006/01**

(51) Int Cl.:
***B01D 24/24*** *(2006.01)*    ***B01D 24/40*** *(2006.01)*

(21) Numéro de dépôt: **03744881.8**

(22) Date de dépôt: **21.03.2003**

(86) Numéro de dépôt international:
**PCT/FR2003/000896**

(87) Numéro de publication internationale:
**WO 2003/080213 (02.10.2003 Gazette 2003/40)**

(54) **PROCEDE ET INSTALLATION POUR LA FILTRATION DES MILIEUX LIQUIDES GENERANT DANS LE LIQUIDE TRAITE UN MOUVEMENT D ENSEMBLE SPIRA LE**

VERFAHREN UND ANLAGE ZUM FILTRIEREN VON FLÜSSIGEN MEDIEN DURCH ERZEUGUNG EINER INSGESAMT SPIRALFÖRMIGEN BEWEGUNG IN DER BEHANDELTEN FLÜSSIGKEIT

METHOD AND INSTALLATION FOR FILTERING LIQUID MEDIA GENERATING IN THE TREATED LIQUID AN OVERALL SPIRALLING MOVEMENT

(84) Etats contractants désignés:
**AT BE BG CH CY CZ DE DK EE ES FI FR GB GR HU IE IT LI LU MC NL PT RO SE SI SK TR**

(30) Priorité: **22.03.2002 FR 0203657**

(43) Date de publication de la demande:
**29.12.2004 Bulletin 2004/53**

(73) Titulaire: **AQUATRIUM**
**54000 Nancy (FR)**

(72) Inventeurs:
• **COULOM, Thierry**
**F-54000 Nancy (FR)**
• **BOEGLIN, Stéphane**
**F-54160 Frolois (FR)**
• **PROBST, Laurent**
**F-54510 Tomblaine (FR)**

(74) Mandataire: **Poupon, Michel**
**Cabinet Michel POUPON,**
**L'Escurial,**
**Technopole de Brabois,**
**17, avenue de la Forêt de Haye**
**54519 Vandoeuvre-les-Nancy Cédex (FR)**

(56) Documents cités:
**FR-A- 2 788 702**

• **DATABASE WPI Week 199404 Derwent Publications Ltd., London, GB; AN 1994-033648 XP002221034 KAMYSHAN; OMELCHENKO, PUDVIL: "Partial or deep cleaner for natural water" -& SU 1 787 042 A (MAKEEVKA CIVIL ENG INST), 7 janvier 1993 (1993-01-07)**

**Description**

La présente invention concerne un nouveau procédé de filtration de milieux liquides, par exemple mais non limitativement des eaux de surface, elle concerne également les installations de mise en oeuvre du procédé.

Un procédé traditionnellement utilisé pour traiter les eaux de surface est la filtration biologique lente qui est une reproduction du processus naturel d'autoépuration de l'eau. Cette technique consiste à faire percoler un flux d'eau à traiter au travers d'un lit de matériau filtrant à des vitesses inférieures à 15m/jour (voir schéma de principe en figure A).

Le fonctionnement d'une telle installation doit comporter un matériau filtrant (a) dont l'épaisseur initiale est d'environ un mètre et une hauteur d'eau surnageante (b) de 1,5 à 2 mètres. Par conséquent, la hauteur d'un tel ouvrage est comprise entre 2,5 et 3 mètres.

Un système de drainage recueille l'eau filtrée en fond d'installation.

Dans une telle installation, le flux de matières en suspension de l'eau brute entrant dans le matériau filtrant (a) se répartit uniformément sur la surface de celui-ci provoquant un colmatage uniforme de l'ensemble de la surface filtrante et entraînant un rehaussement de la hauteur d'eau surnageante (b) de manière à conserver un débit d'eau traitée constant. Lorsque l'eau atteint un niveau maximum, il est nécessaire d'intervenir afin d'opérer un processus de décolmatage. Ce décolmatage s'effectue en trois phases principales : vidange de l'eau surnageante, extraction des trois à cinq premiers centimètres colmatés, remplissage du filtre avec l'eau à traiter. Ces trois opérations sont lourdes dans leur mise en oeuvre et nécessitent un temps assez long qui peut dépasser la semaine. Aussi est-il nécessaire de dédoubler les installations afin de maintenir la production d'eau potable. Aussi, la filtration biologique lente traditionnelle nécessite-t-elle de disposer d'une eau brute de qualité inférieure à 20 et plutôt à 10 NTU afin de limiter dans le temps les opérations de décolmatage. Par ailleurs, l'extraction de matériau filtrant lors des décolmatages successifs engendre une baisse progressive de la hauteur de ce demier. Après avoir atteint une hauteur limite de 40 à 50 cm, il est nécessaire de réapprovisionner en matériau filtrant, ce qui est un facteur limitant pour la gestion de l'installation.

Le but des recherches menées par la demanderesse est de s'affranchir de toutes ces contraintes de l'art antérieur.

La demanderesse a déjà développé un premier axe de recherche basé sur un principe consistant à opposer directement en surface du milieu filtrant, le flux d'eau brute à traiter et le flux d'eau traitée issue du drainage à travers le milieu filtrant.

Ce premier axe de recherche a conduit au développement d'un procédé de traitement appelé Rétrofiltration ® et décrit en détail dans le brevet français FR 2 788 702.

La demanderesse a développé indépendamment un deuxième axe de recherche pour s'affranchir des contraintes précitées de l'art antérieur.

Selon ce deuxième axe de recherche, la demanderesse a cherché à combiner dans un même procédé ou une même installation les avantages de deux principes a priori techniquement incompatibles.

Le premier avantage est celui de la filtration en cascade ou en série dont le principe est schématisé en figure B. Selon ce principe, l'eau brute entrant en haut du premier filtre subit (n) filtrations successives et sa qualité est améliorée à chaque filtration, puisque l'eau de drainage de chaque filtre (n) alimente l'entrée du filtre suivant (n + 1).

Le deuxième avantage est celui d'un cheminement hydraulique continu dans un chenal filtrant simplifiant les opérations de décolmatage de la masse filtrante.

Or à l'évidence, le principe de la filtration en série (voir figure B) impose physiquement des masses filtrantes individualisées à décolmater obligatoirement individuellement avec tous les inconvénients cités précédemment.

La demanderesse a cependant réussi à combiner ces deux avantages dans un nouveau procédé de traitement dont le principe de base consiste à impliquer au flux d'eau à traiter un mouvement spiralé le long d'un chenal de filtration.

L'invention consiste en un procédé de filtration de milieux liquides, par exemple mais non limitativement des eaux de surface, consistant à opérer au moins une étape de filtration dans la masse filtrante d'un chenal, ladite masse filtrante étant contenue et immergée dans un bassin et sa hauteur inférieure à celle du bassin caractérisé en ce que :

- on injecte sensiblement l'eau brute non encore traitée à une extrémité appelée entrée, de ce chenal et en surface de la masse filtrante et on extrait l'eau traitée sensiblement à l'autre extrémité appelée sortie de ce chenal, les emplacements de l'injection et de l'extraction engendrant en surface de la masse filtrante une nappe de liquide de surface de hauteur susceptible d'un mouvement horizontal $(F_1)$ dans le sens de l'entrée vers la sortie.
- on crée le long du chenal, dans la masse filtrante immergée et sans qu'il soit besoin de cloisonnement, une succession de boucles de recyclages pour engendrer dans la masse filtrante une succession de colonnes filtrantes adjacentes les unes aux autres par aspiration de liquide depuis le bas de la masse filtrante et sa réinjection par l'extérieur du chenal directement au niveau de la nappe de surface et dans la colonne correspondante

de façon à générer entre l'entrée et la sortie du liquide un mouvement d'ensemble spiralé par combinaison des deux mouvements.

Selon une variante on extrait également l'eau traitée sensiblement au niveau de la surface de la nappe filtrante.

Selon une autre variante on extrait l'eau traitée au niveau du drain en bas de la dernière colonne filtrante.

Dans le procédé selon l'invention on peut en outre effectuer au moins un traitement physico-chimique complémentaire en au moins un point d'au moins une colonne filtrante ou d'au moins une boucle de recyclage entre l'entrée et la sortie du liquide.

L'invention concerne également une installation de mise en oeuvre du procédé, en particulier une installation pour la filtration de milieux liquides, par exemple mais non limitativement des eaux de surface, consistant à opérer au moins une étape de filtration dans le chenal d'une masse filtrante de hauteur prédéterminée contenue dans un bassin de hauteur supérieure à celle de la masse filtrante, ladite masse filtrante étant totalement immergée caractérisée en ce qu'elle comporte :

- un bassin compartimenté en un chenal et un contre chenal séparés l'un de l'autre par au moins une cloison longitudinale du bassin, le chenal étant prévu pour contenir la masse filtrante et le contre chenal pour contenir pluralité de n moyens de recyclage (avec o <i≤n) avec une pluralité de sorties de drains réparties sur la longueur du chenal.
- une entrée à une extrémité du chenal avec des moyens aptes à injecter l'eau brute au-dessus de la masse filtrante et à engendrer en surface de la masse filtrante une nappe de liquide,
- associé à chaque sortie de drain, un moyen de recyclage apte à réinjecter l'eau drainée en haut de la colonne de filtration ainsi formée au-dessus de celle-ci,
- une sortie d'eau traitée à l'autre extrémité du chenal apte à engendrer dans la nappe de liquide un mouvement horizontal de l'entrée vers la sortie.

Selon une variante de l'installation la sortie d'eau traitée est située au niveau de la nappe

Selon une autre variante de l'installation la sortie d'eau traitée est située au niveau du drain de la dernière colonne de filtration.

Selon une première variante des moyens de recyclage :

- une pompe est implantée directement sur un ou un ensemble de drains, le ou les drains posés en bas de la cuve et recouverts de sable traversant la paroi par une connexion étanche et se prolongeant à l'extérieur de celle-ci par un tuyau étanche connecté à le ou les drains et jusqu'à l'admission de ladite pompe dont le refoulement est situé dans la nappe de surface

- un capteur de pression et/ou de débit contrôle le fonctionnement de la pompe.

Selon une deuxième variante des moyens de recyclage, on prévoit : dans le fond de chaque compartiment du contre chenal constituant chacune une bâche de réception des eaux drainées, depuis cette bâche un moyen de pompage (pompe immergée mise en oeuvre dans la bâche ou une pompe en cale sèche prélevant l'eau dans la bâche) réinjectant l'eau drainée dans la nappe, ladite pompe fonctionnant entre deux points de consigne.

Selon une troisième variante des moyens de recyclage :

- un air lift est implanté directement sur un ou un ensemble drain, le ou les drains posés en bas de cuve et recouverts de sable étant connectés à une colonne d'eau verticale en connexion dans sa partie supérieure avec la nappe de surface.

L'installation peut en outre comporter des moyens aptes à injecter un produit de traitement en au moins un point du chenal et/ou des moyens aptes à injecter un produit de traitement en au moins un point d'au moins une boucle de recyclage.

Selon des variantes de réalisation du chenal, celui-ci est rectiligne et selon d'autres variantes le bassin comporte une succession de chicanes conférant au chenal une configuration non rectiligne dite « en chicanes ».

On comprendra mieux l'invention à l'aide de la description ci-après faite en référence aux figures annexées suivantes :

- figure A : croquis montrant, vue en coupe verticale, une installation de l'art antérieur citée en partie introductive,
- figure B : croquis montrant, vue en coupe verticale, une installation de filtrations en séries citée en partie introductive,
- figures 1a et 1 b : schémas de principe d'une installation respectivement, vue en plan, et vue en coupe verticale AA' à chenal de filtration fonctionnant selon le procédé de l'invention,
- figure 2 : schéma de principe montrant le déplacement global du fluide dans le chenal filtrant,
- figures 3 et 4 : dessins montrant vue en plan deux variantes non limitatives d'installation fonctionnant selon le principe des figures 1 à 2, selon deux exemples d'application.

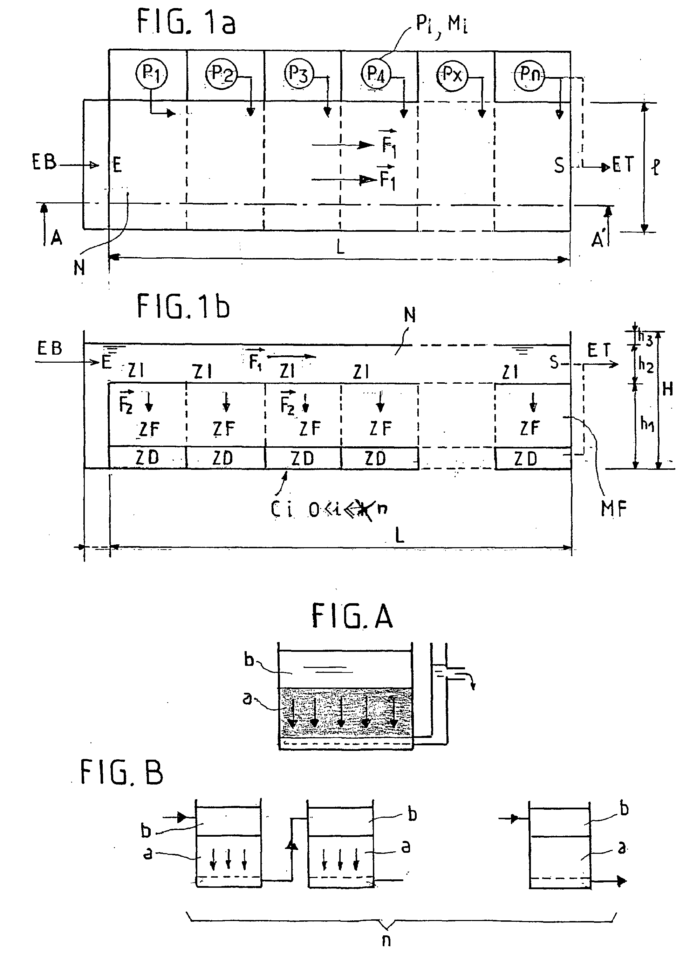

On se rapporte d'abord aux figures 1a et 1 b expliquant le principe du procédé selon l'invention dont les caractéristiques principales de fonctionnement sont les suivantes :

- on dispose d'une masse filtrante (MF) de hauteur ($h_1$) dans un chenal, c'est-à-dire dans un bassin de longueur (L) et largeur (l) (avec L>>l) et de hauteur (H), ladite masse filtrante étant totalement immergée (avec $h_1$ < H),

- on injecte sensiblement en direction horizontale l'eau brute non encore traitée (EB) à une extrémité appelée entrée (E), de ce chenal et en surface de la masse filtrante et on extrait l'eau traitée (ET) sensiblement horizontalement à l'autre extrémité appelée sortie (S) de ce chenal et également à sa surface.

Les emplacements de l'injection horizontale (E) et de l'extraction horizontale (S) engendrent en surface de la masse filtrante une nappe de liquide de surface (N) de hauteur ($h_2$) susceptible d'un mouvement horizontal $(F_1)$ dans le sens de l'entrée (E) vers la sortie (S).

- on crée le long du chenal, dans la masse filtrante immergée de hauteur ($h_1$), et sans qu'il soit besoin de cloisonnement, une succession de (n) colonnes filtrantes ($C_n$), adjacentes les unes aux autres, grâce à une pluralité de (n) drains indépendants disposés à intervalles réguliers dans le fond de la masse filtrante, chacun associé à un moyen de recyclage apte à aspirer le liquide depuis le bas d'une colonne, de le conduire extérieurement à la colonne jusqu'en haut de celle-ci et de le réinjecter dans la nappe de surface (N) de la colonne correspondante. La fonction de chacun des (n) drains ($D_i$), avec o<i≤n est classiquement d'engendrer dans chaque colonne filtrante ($C_i$) correspondante un mouvement vertical descendant ($F_2$) du fluide à traiter. La fonction de chaque moyen de recyclage est classiquement de remonter le liquide après son drainage par une colonne ($C_i$), extérieurement au chenal, au niveau de la nappe de surface (N), et dans la même colonne ($C_i$).

Ainsi dans chaque colonne virtuelle($C_i$) de filtration de la masse filtrante on peut distinguer successivement une zone d'infiltration (ZI) (mesurée en m2) au contact de la nappe de surface (N), puis une zone de filtration (ZF) (mesurée en m3) proprement dite, puis une zone de drainage (ZD) (mesurée en m3).

Le fonctionnement peut s'expliquer de la manière ci-après.

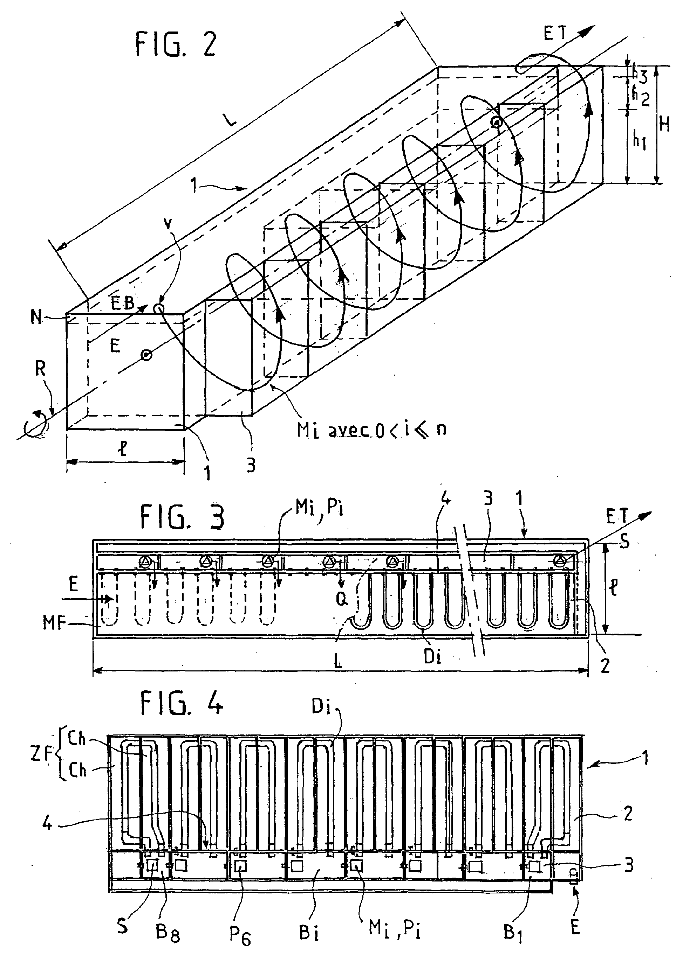

La conjugaison du mouvement d'aspiration horizontal selon $(F_1)$, et du mouvement d'aspiration vertical selon $(F_2)$ entraîne un volume élémentaire (v) d'eau brute (EB) dès son entrée en (E) dans le chenal, selon un mouvement spiralé dont l'axe de rotation (R) virtuel est horizontal et dans l'axe du chenal, comme cela est schématisé en figure 2.

Les différents paramètres de vitesses et de débits du procédé sont ajustables et modifiables selon les réglages d'injection d'eau brute (EB)d'extraction d'eau traitée (ET), et d'aspiration au niveau des drains et de la qualité de l'eau. Ces différents réglages dépendent de l'application choisie et quelques exemples en seront donnés en fin de description.

Dès son introduction, en entrée (E), le volume élémentaire (v) s'infiltre en début de la zone d'infiltration (ZI) de la première colonne de filtration ($C_1$) est filtré sur toute la hauteur de la zone de filtration (ZF) de la même colonne ($C_n$) puis drainé dans la zone de drainage (ZD), de la même colonne ($C_1$) et enfin réinjecté par l'extérieur du chenal en fin de la zone de filtration (ZI) de la même colonne ($C_1$). Sous l'action de l'entraînement horizontal ($F_1$), ce volume élémentaire va être dirigé vers la deuxième colonne ($C_2$), s'infiltrer dans la zone d'infiltration de ($C_2$) etc... jusqu'à la dernière colonne ($C_n$) d'où il sera extrait en sortie (S) d'eau traitée (ET).

Dans la pratique, il peut exister des recouvrements au niveau des frontières entre deux colonnes de filtration ($C_i$) successives et donc entre les zones d'infiltrations (ZI), de filtration (ZF), ou de drainage (ZD) successives, mais cela est sans incidence sur le procédé qui admet une certaine incertitude à ce niveau résultant des réglages et des applications.

En théorie la majorité des volumes élémentaires subit ainsi, le long de son parcours spiralé, (n) filtrations successives et sa qualité s'améliore à chaque filtration (n + 1) par rapport à la filtration précédente (n).

Un pourcentage variable, selon les réglages et les applications, de ces volumes élémentaires, pourrait éventuellement ne traverser qu'une partie des (n) colonnes.

Concernant le colmatage de la masse filtrante, celui-ci ne se produit qu'au niveau des zones d'infiltration (ZI) si la vitesse de filtration est inférieure à 15m/j. Le colmatage des colonnes de filtration successives, de l'entrée à la sortie(S) est progressif à mesure que le temps s'écoule.

Selon le moyen de recyclage mis en oeuvre et suivant les dispositifs utilisés pour son fonctionnement et sa sécurisation et l'état d'encrassement de chaque colonne de filtration ($C_i$) (valeur de la perte de charge engendrée par le colmatage), le débit de recyclage peut varier de façon continue ou discontinue. Ceci sera expliqué en détail ultérieurement.

On peut procéder au décolmatage de deux manières.

Si le colmatage s'est cantonné dans les zones d'infiltration, on procède, après arrêt du procédé de traitement, à un lavage au jet d'eau sous pression des zones colmatées et progressivement de la sortie du chenal vers l'entrée pour évacuer les eaux de lavage par un écoulement libre et gravitaire prévu en entrée du chenal.

Si le colmatage est plus profond on applique les techniques classiques de lavage à contre-courant.

Par rapport à un procédé de filtrations en série (voir la figure B) de l'art antérieur le procédé selon l'invention apporte un certain nombre d'avantages concernant l'étape de décolmatage qui termine un cycle de fonctionnement :

1. Dans le cas de (n) filtrations en série le cycle s'achèvera lorsqu'un seul des filtres en série aura atteint sa perte de charge maximale et très certainement, il s'agira du filtre n° 1. Dans le cas du procédé selon l'invention le décolmatage des n colonnes de filtration successives sera déclenché quand le colmatage de la (n - x) zone de filtration aura atteint sa valeur maximum avec x variant de 1 à (n -1) selon les applications et la nature de l'eau à traiter.

En conséquence le procédé de l'invention est géré en fonction d'un encrassement global des n colonnes ce qui ne peut être obtenu dans le cas de n filtres en série.

2. Dans le cas des n filtrations en série le décolmatage est réalisé filtre par filtre et chacun d'entre eux possède son propre système d'évacuation ce qui n'est pas le cas dans l'invention.

3. Dans le cas de n filtrations en série, le décolmatage de chacun des filtres est indépendant des autres alors que dans le cas de l'invention simultanément tout ou partie des n colonnes filtrantes peut être nettoyée.

4. Dans le cas de n filtrations en série, l'eau filtrée par le filtre (x) est automatiquement issue du filtre (x - 1) alors que le procédé de l'invention ne comporte pas cette obligation en vertu de la liaison hydraulique existant dan la nappe (N) de surface du chenal et jouant le rôle de by-pass potentiel entre deux colonnes de filtration adjacentes ($C_i$) et ($C_{i+1}$)..

5. Dans le cas de n filtrations en série, le débit de filtration (capacité de traitement) du filtre (i avec o<i≤n) dépend du débit de filtration des filtres placés en amont [(filtres 1 à (x - 1)] alors que dans le procédé de l'invention le débit de filtration de chaque colonne de filtration est indépendant des autres du fait de la liaison en surface, qui joue le rôle de by-pass potentiel entre colonnes adjacentes.

Par rapport au procédé de Rétrofiltration ® du brevet FR 27 88 702 de la demanderesse, le procédé selon l'invention se démarque par ses conditions de fonctionnement à savoir :

1. La rétrofiltration ® implique obligatoirement une faible épaisseur de la lame d'eau surnageante afin qu'il n'y ait pas mélange des eaux de recyclage avec les eaux à traiter alors que le procédé selon l'invention n'a pas cette obligation,

2. Le débit de recyclage de la Rétrofiltration ® est toujours supérieur au débit d'eau à traiter afin de créer l'effet « retour » alors que le procédé selon l'invention implique un débit de recyclage de chaque zone de drainage sans rapport prédéterminé avec le débit à traiter. En outre, chaque débit de recyclage de chaque colonne de filtration est au maximum égal au débit d'eau à traiter, donc impossibilité d'un effet d'opposition de deux flux en surface comme dans la rétrofiltration.

On décrit à présent à titre d'exemple non limitatif une installation de mise en oeuvre du procédé selon l'invention, en référence à la figure 3.

Une installation selon la figure 3 comporte les moyens essentiels suivants :

- un bassin (1) compartimenté en un chenal (2) et un contre chenal (3) parallèles séparés l'un de l'autre de façon étanche par au moins une cloison (4) longitudinale du bassin. Le chenal est prévu pour contenir la masse filtrante, et le contre chenal est prévu pour contenir des moyens de recyclage.
Les dimensions du bassin sont :

  - L = longueur du bassin et du chenal,
  - I = largeur du bassin,
  - H = $h_1$ (hauteur de la masse filtrante) + $h_2$ (hauteur de la nappe de surface) + $h_3$ (hauteur de garde)

- une pluralité de drains ($D_i$) répartis dans le fond du chenal, chacun traversant la cloison de séparation et chacun apte à communiquer avec un moyen de recyclage, ($M_i$),
- une entrée (E) à une extrémité avec des moyens aptes à injecter l'eau brute (EB) horizontalement au-dessus de la hauteur ($h_1$) et, par exemple, parallèlement à l'axe longitudinal du chenal en sortie (S),
- associé à chaque sortie de drain un moyen de recyclage ($M_i$) apte à réinjecter l'eau drainée en haut de la colonne de filtration et au-dessus du niveau ($h_1$).

Aucun cloisonnement n'est prévu dans la masse filtrante sauf éventuellement dans sa partie basse pour séparer deux zones de drainage (ZD) successives.

Eventuellement, des cloisonnements transversaux sont prévus dans le contre chenal selon les variantes d'exécution ou les exemples d'application.

Plusieurs variantes de moyens de recyclage peuvent être prévues.

Selon une première variante on implante directement une pompe ($P_i$) sur chaque drain ($D_i$) ou sur un ensemble de drains. Pour ce faire, le drain, posé en bas de cuve et recouvert de sable traverse la paroi (4) de la cuve par une connexion étanche et se prolonge à l'extérieur de celle-ci par un tuyau étanche connecté à l'admission d'une pompe. Le refoulement est réinjecté dans la nappe de surface. Ce cas est particulier en ce que la perte de charge négative du lit peut progresser jusqu'à la valeur de cavitation de l'eau recyclée, soit un maximum théorique de 10.33 mètres de colonne d'eau de perte de charge. Le fonctionnement de la pompe sera asservi à un capteur de pression négative et/ou un capteur de débit qui contrôlera le fonctionnement de la pompe. Dans ce cas, au fur et à mesure du colmatage du filtre la perte de charge induite va générer une dépression qui pourra aller jusqu'à la capacité d'aspiration du moyen de pompage utilisé (plusieurs mètres de colonne d'eau). Par ailleurs simultanément le débit réglé initialement va décroître progressivement (en fonction des caractéristiques du moyen de pompage) jusqu'à s'annuler (cavitation). Dans cette variante le fonctionnement de l'installation est continu.

Selon une deuxième variante le fond de chaque compartiment du contre chenal constitue une bâche de réception des eaux drainées.

Dans ce cas le drain, posé en bas de cuve et recouvert de sable, traverse la paroi de la cuve sans nécessiter une étanchéité parfaite (« étanchéité » au sable, mais pas à l'eau) pour déboucher dans une bâche placée de l'autre côté de la cuve au droit du drain. Depuis cette bâche un moyen de pompage (pompe immergée mise en oeuvre dans la bâche ou une pompe en cale sèche prélevant l'eau dans la bâche) réinjecte l'eau drainée dans la nappe (N). Dans ce cas la pompe ne pourra fonctionner qu'en présence d'eau dans la bâche, c'est-à-dire pour une perte de charge induite par le colmatage au maximum égal à la hauteur d'eau dans le filtre (moins la perte de charge initiale du milieu filtrant). Dans ces conditions d'utilisation, nous choisirons plutôt un fonctionnement du moyen de pompage entre deux points de consignes de hauteur d'eau dans la bâche : « un niveau haut » (par exemple égal au niveau d'eau dans la bâche filtre propre) et un « niveau bas » juste au-dessus du niveau des drains. Au fur et à mesure du fonctionnement, les différentes zones d'infiltration (ZI) vont se colmater successivement. Le fonctionnement de chacune des pompes ne va pas pour autant cesser. En effet, le fonctionnement de l'installation est intermittent. Le dispositif de sécurité à « niveau bas » arrêtera la pompe mais pas la filtration qui sera d'autant plus lente (inférieure à la vitesse nominale du pompage) que le filtre est encrassé Quand le niveau d'eau dans la bâche aura atteint le « niveau haut » (supérieure ou égale au « niveau bas », la pompe reprendra son fonctionnement (remarque : la pompe fonctionnera ensuite de moins en moins souvent).

Selon une troisième variante on implante un air-lift sur chaque drain ($D_i$), ou sur un ensemble de drains.

Dans ce cas le drain, posé en bas de cuve et recouvert de sable, est connecté à une colonne d'eau verticale (généralement un tuyau) en connexion dans sa partie supérieure avec la nappe d'eau en surface ; soit que sa partie haute débouche sous le niveau d'eau de la nappe (solution préférée), soit qu'il est à la même hauteur que ce niveau, soit enfin qu'il lui est supérieur (mais ce cas est comparable au cas de la première variante où le moyen de pompage serait un air-lift). Au cours du colmatage du filtre, le débit de l'air-lift va progressivement baisser et tendre vers zéro et même s'annuler si la partie haute de l'air-lift est au-dessus du niveau d'eau dans le filtre.

Selon le mode de pompage utilisé, les résultats et le fonctionnement du filtre seront très différents, par exemple :

- L'air-lift est un moyen de pompage sans grande puissance (capacité de relevage) mais qui apporte au milieu une oxygénation importante pour une faible consommation énergétique, ceci peut être souhaitable pour maintenir l'aérobiose du milieu.

- Une bâche de réception des eaux filtrées équipée d'une pompe bien dimensionnée ne consomme pas plus d'énergie qu'un air-lift mais limite l'apport en oxygène dans le milieu ce qui peut être souhaitable pour maintenir l'anaérobiose ou l'anoxie du milieu

- Enfin un moyen de pompage directement connecté au drain permet de fonctionner avec des pertes de charges plus importantes et la durée du cycle de fonctionnement comprise entre deux décolmatages est augmentée de manière sensible.

A titre d'illustration des nombreuses applications possibles du procédé de l'invention on donne ci-après deux exemples non limitatifs d'applications.

**Premier exemple d'application** :

Il s'agit d'une installation d'une capacité de traitement de 100 m³/jour destinée à produire de l'eau potable à partir d'une ressource constituée d'une eau superficielle dont la turbidité varie de 1 à 300 NTU.

La masse filtrante de l'installation (voir figure 3) est constituée d'un massif de sable de 100 m² de dimension 50 x 2 mètres par 0.50 mètres de hauteur (soit 50 m³ de sable) ceinturé d'un muret en béton armé de 12 cm d'épaisseur et de 0,8 mètres de hauteur comprenant : 50 cm de sable, 20 cm de lame d'eau et 10 cm de garde. L'ensemble du massif de sable est drainé par des drains longs de 4.5 mètres, de diamètre 80 mm disposés sur le radier en fer à cheval le long du massif de sable de telle sorte que chaque bout de drain traverse (tous les 50 cm) la paroi qui ceinture le massif de sable en débouchant d'un seul côté dans une bâche de même profondeur placée en contre-chenal le long du massif de sable.

Ce contre-chenal qui sert de bâche de réception des eaux drainées de tous les drains du massif de sable est divisé par exemple en dix bâches successives, indépendantes, étanches et d'égal volume. Ainsi, chacune des bâches draine un secteur spécifique du massif de sable. Chacune des bâches est équipée d'une pompe immergée de 5m³/h correspondant au débit à traiter d'eau brute (celui-ci est de 100m³/j pour un fonctionnement de 20 heures par jour, soit 5 m³/h). Chacune des bâches est équipée de deux poires de niveau, l'une dite de « niveau bas » à 100 mm du radier (réf. Zéro en fond de bâche) et l'autre de « niveau haut » à 600 mm du radier. Pendant toute la période de fonctionnement de l'installation, les pompes immergées de chacune des bâches pompent les eaux drainées et les renvoient dans la nappe d'eau surnageante (N) du massif de sable située au-dessus de la zone de drainage dont elles ont été extraites. Tant que le niveau d'eau dans la bâche de réception n'est pas supérieur au « niveau bas », la pompe a un fonctionnement continu. Puis dès que cette perte de charge augmente, la pompe a un fonctionnement discontinu comprenant des séquences d'arrêts sans que jamais les drains ne cessent d'alimenter la bâche d'une eau drainée (avec un débit moindre qui va en diminuant mais sans que jamais il ne puisse être nul).

Au cours du temps, les pompes de chacune des bâches vont, de l'entrée vers la sortie du chenal, progressivement adopter le mode de fonctionnement discontinu et lorsque la 7ème pompe située dans la 7ème bâche adoptera le mode de fonctionnement discontinu, il faudra procéder à un lavage de l'installation afin de recommencer un cycle complet de filtration. Ainsi, un minimum de quatre filtrations lentes de l'eau brute est obtenu et garanti par le mode de fonctionnement mis en oeuvre ce qui permet d'obtenir la qualité de traitement requise.

Le décolmatage de l'installation est obtenu en lavant au jet sous pression la surface du massif de sable dans son ensemble en commençant par la partie arrière (sortie) jusqu'à l'avant (entrée) de l'installation. Durant cette opération, l'ensemble de la production et des pompes de recyclages sont arrêtées et les eaux de lavages sont évacuées gravitairement vers l'entrée de l'installation, où elle sont recueillies par une conduite d'évacuation des eaux de lavage. Pour faciliter le lavage notamment en accélérant l'évacuation des matières en suspension qui ont été débarrassées du sable par le jet sous pression, on peut introduite de l'eau brute à l'arrière du filtre ce qui va générer un écoulement de l'arrière à l'avant du filtre et améliorer l'emportement des matières vers la sortie de l'ouvrage.

Une fois le lavage terminé, l'installation est réapprovisionnée en eau brute jusqu'à obtenir le niveau de fonctionnement de 700 mm d'eau (par rapport au radier) où la production reprend (une poire de niveau particulière est prévue à cet effet. Dès le début du réapprovisionnement de l'installation en eaux brutes, les pompes de recyclages sont réarmées et s'enclenchent au « niveau haut » dans les bâches de réception (600 mm par rapport au radier), ainsi la lame d'eau surnageante est traitée entièrement avant que la production ne commence.

### Deuxième exemple d'application :

Il s'agit d'une installation d'une capacité de traitement de 4m³/jour destinée à produire de l'eau potable à partir d'une émergence de source issue d'un aquifère karstique à destination notamment des sites isolés non connectés au réseau d'eau potable publique (fermes, bergeries, particulier isolé non raccordé,...).

L'installation en chaudronnerie plastique (voir figure 4) est constituée d'un massif de sable de 4 mètres de long et de 1 mètre de large soit une surface de 4m². La hauteur de l'ouvrage est de 0,8 mètres avec 50 cm de sable (soit 2m³ de sable), 20 cm de lame d'eau et 10 cm de garde.

La surface de filtration est agencée de manière à former un chenal de 0.25 mètres de large et de 16 m de long grâce à une sorte de « découpage » de la surface en 16 chicanes (Ch) transversales de 0.25 mètres de large et 1 mètre de longueur.

La surface de filtration est formée de 8 zones de filtration successives, (ZF) distinctes et adjacentes constituées chacune de deux chicanes (de 0.25 m x 1 m).

Chaque zone de filtration est drainée par un drain long de 2.25 mètres, et de 50 mm diamètre disposés sur le fond de l'ouvrage en fer à cheval de telle sorte que les deux extrémités du drain débouchent du même côté dans une bâche de réception (Bi) des eaux filtrées de même hauteur que le filtre et attenante à la zone de filtration.

Les différentes bâches de réception ont des dimensions identiques excepté la première ($B_1$) et la dernière ($B_8$) de manière à libérer des espaces respectivement pour l'admission des eaux brutes et pour l'extraction des eaux à traiter et le lavage.

Les 8 zones de filtrations, les 8 bâches de réception et les zones d'entrée et de sortie forment ainsi un monobloc de 1.25 mètre de large et de 4 mètres de longueur (hors épaisseur des parois).

Au niveau du fonctionnement, chacune des bâches de réception récupère les eaux filtrées d'un secteur spécifique du massif de sable. Chaque bâche est équipée d'une pompe immergée spécifique capable d'une part de relever 0.20 m³/h (soit le débit de production : 4m³/j pour un fonctionnement de 20 heures par jour) et d'autre part de fonctionner avec un mélange (air-eau). Les pompes sont mises en place à 100 mm du fond de l'ouvrage, au-dessus du niveau des drains de manière à ne jamais les dénoyer. La pompe de la 8ème bâche de réception est la pompe d'extraction des eaux traitées.

Pendant toute la période de fonctionnement de l'installation, les pompes immergées de chacune des bâches pompent les eaux drainées et les renvoient dans la nappe d'eau surnageante du massif de sable située au-dessus de la zone de drainage dont elles ont été extraites.

Au cours du temps (colmatage du filtre), les débits des pompes de chacune des bâches vont, de l'avant (entrée d'eau brute) vers l'arrière de l'installation (sortie d'eau traitée), progressivement baisser conjointement avec l'augmentation des pertes de charge. En fait, le niveau d'eau dans ces bâches va progressivement baisser jusqu'à atteindre le niveau d'aspiration des pompes (100 mm/fond de l'ouvrage). Une fois ce niveau atteint, les pompes vont « barboter » (mélange air et eau) et relever un débit égal à la production du drain (inférieur ou égal à 0.2 m³/h)

Quand la 6ème pompe (P$_6$)située dans la 6ème bâche commencera à barboter, il faudra procéder à un lavage de l'installation afin de recommencer un cycle complet de filtration. Ainsi, un minimum de trois filtrations lentes de l'eau brute est obtenu et garanti par le mode de fonctionnement mis en oeuvre ce qui permet d'obtenir la qualité de traitement requise

Le décolmatage de l'installation est obtenu en lavant au jet sous pression la surface du massif de sable dans son ensemble en commençant par la partie arrière jusqu'à l'entrée de l'installation. Durant cette opération, l'ensemble de la production et des pompes de recyclages sont arrêtées et les eaux de lavage sont évacuées gravitairement vers l'entrée de l'installation où elles sont recueillies par une conduite accélérant l'évacuation des matières en suspension qui ont été débarrassées du sable par le jet sous pression, on peut introduire de l'eau brute à l'arrière du filtre ce qui va générer un écoulement de l'arrière à l'avant du filtre et améliorer l'emportement des matières vers la sortie de l'ouvrage

Une fois le lavage terminé, l'installation est réapprovisionnée en eau brute jusqu'à obtenir son niveau de fonctionnement (soit 70 cm par rapport au fond de l'ouvrage). Une fois remplies, les pompes sont remises en fonctionnement. Cependant, le débit de la pompe d'extraction des eaux traitées (8ème pompe) est renvoyé pendant une heure dans le filtre (fonctionnant en circuit fermé) avant la reprise effective de la production. Ainsi la nappe d'eau surnageante (N) est traitée entièrement avant que la production ne commence.

De façon optionnelle on peut également prévoir dans le procédé de l'invention un ou plusieurs traitements additionnels physico-chimiques additionnels du liquide en un point d'au moins une colonne filtrante, ou d'au moins une boucle de recyclage. Ce ou ces traitements complémentaires ou additionnels peuvent consister en une injection d'au moins un produit dans au moins une boucle de recyclage.

Le produit injecté peut par exemple être le produit injecté est choisi dans l'ensemble (chlorure ferrique, sulfate d'aluminium, polyélectrolyte, soude, acide chlorhydrique, charbon actif en poudre, ozone).

Par exemple également, le traitement complémentaire consiste en la modification de tout ou partie du matériau d'au moins une colonne filtrante.

Par exemple également, la modification du matériau consiste dans la colonne concernée en l'apport d'une couche de charbon actif en poudre, ladite couche pouvant présenter une hauteur variable.

Par exemple également, le traitement complémentaire consiste à remplacer le sable par un matériau choisi dans la liste (calcaire, charbon actif en grains, zéolithe).

Par exemple également, on réalise, après arrêt du procédé de filtration, un lavage au jet d'eau sous pression des zones colmatées et progressivement de la sortie du chenal vers l'entrée pour évacuer les eaux de lavage par un écoulement libre et gravitaire prévu en entrée du chenal. Puis optionnellement on réalise, après arrêt du procédé, un lavage à contre courant.

Dans tout le texte de la présente demande l'expression « air-lift » est la désignation habituelle et sans équivalent français par l'homme du métier d'un dispositif à ascension et/ou circulation de liquide par injection d'air dans une colonne d'eau.

Les termes « eau brute » et « eau traitée » sont utilisés au sens général de liquide brut et liquide traité selon l'habitude de l'homme du métier.

## Revendications

**1.** Procédé de filtration de milieux liquides, par exemple mais non limitativement des eaux de surface, consistant à opérer au moins une étape de filtration dans une masse filtrante (MF) de hauteur (h$_1$) dans un chenal, ladite masse filtrante étant contenue dans un bassin et de hauteur (H) supérieure à (h$_1$) et ladite masse filtrante étant totalement immergée **caractérisé en ce que** :

- on injecte sensiblement l'eau brute non encore traitée (EB) à une extrémité appelée entrée (E), de ce chenal et en surface de la masse filtrante et on extrait l'eau traitée (ET) sensiblement à l'autre extrémité appelée sortie (S) de ce chenal, les emplacements de l'injection (E) et de l'extraction (S) engendrant en surface de la masse filtrante une nappe de liquide de surface (N) de hauteur (h$_2$) susceptible d'un mouvement horizontal (F$_1$) dans le sens de l'entrée $\overrightarrow{(E)}$ vers la sortie (S).

- on crée le long du chenal, dans la masse filtrante immergée de hauteur (h$_1$), et sans qu'il soit besoin de cloisonnement, une succession de (n) boucles de recyclages pour engendrer dans la masse filtrante une succession de (n) colonnes filtrantes (Cn) adjacentes les unes aux autres par aspiration de liquide depuis le bas de la masse filtrante et sa réinjection par l'extérieur du chenal directement au niveau de la nappe de surface (N) et dans la colonne correspondante

de façon à générer entre l'entrée et la sortie du liquide un mouvement d'ensemble spiralé.

**2.** Procédé selon la revendication 1, **caractérisé en ce qu'**on extrait également l'eau traitée (ET) sensiblement au niveau de la surface de la nappe filtrante.

**3.** Procédé selon la revendication 1, **caractérisé en ce qu'**on extrait l'eau traitée (ET) au niveau du drain en bas de la dernière colonne filtrante.

**4.** Procédé selon l'une des revendications 1 à 3 **caractérisé en ce qu'**on effectue au moins un traitement physico-chimique complémentaire en au moins un point d'au moins une colonne filtrante ou d'au moins une boucle de recyclage entre l'entrée et la sortie du liquide.

**5.** Procédé selon la revendication 4 **caractérisé en ce que** le traitement complémentaire consiste en une injection d'au moins un produit dans au moins une boucle de recyclage.

**6.** Procédé selon la revendication 5 **caractérisé en ce que** le produit injecté est choisi dans l'ensemble (chlorure ferrique, sulfate d'aluminium, polyélectrolyte, soude, acide chlorhydrique, charbon actif en poudre, ozone).

**7.** Procédé selon la revendication 4, **caractérisé en ce que** le traitement complémentaire consiste en la modification de tout ou partie du matériau d'au moins une colonne filtrante.

**8.** Procédé selon la revendication 7, **caractérisé en ce que** le traitement complémentaire consiste à remplacer le sable par un matériau choisi dans la liste (calcaire, charbon actif en grains, zéolithe).

**9.** Procédé selon la revendication 7, **caractérisé en ce que** la modification du matériau consiste dans la colonne concernée en l'apport d'une couche de charbon actif en poudre, ladite couche pouvant présenter une hauteur variable.

**10.** Procédé selon l'une des revendications 1 à 9, **caractérisé en ce que** on réalise, après arrêt du procédé de filtration, un lavage au jet d'eau sous pression des zones colmatées et progressivement de la sortie du chenal vers l'entrée pour évacuer les eaux de lavage par un écoulement libre et gravitaire prévu en entrée du chenal.

**11.** Procédé selon l'une des revendications 1 à 9, **caractérisé en ce que** on réalise, après arrêt du procédé, un lavage à contre courant.

**12.** Installation pour la filtration de milieux liquides, par exemple mais non limitativement des eaux de surface, consistant à opérer au moins une étape de filtration dans le chenal d'une masse filtrante (MF) de hauteur ($h_1$) contenue dans un bassin de hauteur (H) supérieur à ($h_1$), ladite masse filtrante étant totalement immergée, **caractérisée en ce qu'**elle comporte :

- un bassin (1) compartimenté en un chenal (2) et un contre chenal (3) séparés l'un de l'autre par au moins une cloison (4) longitudinale du bassin, le chenal étant prévu pour contenir la masse filtrante (MF) et le contre chenal pour contenir n moyens de recyclage (Mi) (avec o <i≤n) avec une pluralité de sorties de drains réparties sur la longueur du chenal.
- une entrée (E) à une extrémité du chenal avec des moyens aptes à injecter l'eau brute (EB) au-dessus de la hauteur ($h_1$) et à engendrer en surface de la masse filtrante une nappe de liquide (N),
- associé à chaque sortie de drain, un moyen de recyclage ($M_i$) apte à réinjecter l'eau drainée en haut de la colonne de filtration et au-dessus du niveau ($h_1$),
- une sortie (S) d'eau traitée (ET) à l'autre extrémité du chenal apte à engendrer dans la nappe de liquide (N) un mouvement horizontal de l'entrée (E) vers la sortie (S).

**13.** Installation selon la revendication 12 **caractérisé en ce que** la sortie (S) d'eau traitée est située au niveau de la nappe (N).

**14.** Installation selon la revendication 12 **caractérisé en ce que** la sortie (S) d'eau traitée est située au niveau du drain de la dernière colonne de filtration.

**15.** Installation selon l'une des revendications 12 à 14, **caractérisée en ce que**, selon une première variante des moyens de recyclage :

- une pompe (Pi) est implantée directement sur un ou un ensemble drain (Di), le ou les drains posés en bas de la cuve et recouvert de sable traversant la paroi (4) par une connexion étanche et se prolongeant à l'extérieur de celle-ci par un tuyau étanche connecté à le ou les drains et jusqu'à l'admission de ladite pompe dont le refoulement est situé dans la nappe de surface (N),
- un capteur de pression et/ou de débit contrôle le fonctionnement de la pompe.

**16.** Installation selon l'une des revendications 12 à 14, **caractérisée en ce que**, selon une deuxième variante des moyens de recyclage :

- le fond de chaque compartiment du contre chenal constituant chacun une bâche de réception des eaux drainées,
- depuis cette bâche un moyen de pompage (pompe immergée mise en oeuvre dans la bâche ou une pompe en cale sèche prélevant l'eau dans la bâche) réinjecte l'eau drainée dans la nappe (N), ladite pompe fonctionnant entre deux points de consigne.

**17.** Installation selon l'une des revendications 12 à 14, **caractérisée** selon une troisième variante des moyens de recyclage :

- un air lift est implanté directement sur un ou un ensemble drain (Di), le ou les drains posé en bas de cuve et recouvert de sable étant connecté à une colonne d'eau verticale en connexion dans sa partie supérieure avec la nappe de surface (N).

18. Installation selon l'une des revendications 12 à 17 **caractérisé en ce qu'**elle comporte en outre des moyens aptes à injecter un produit de traitement en au moins un point du chenal.

19. Installation selon l'une des revendications 12 à 18 **caractérisé en ce qu'**elle comporte en outre des moyens aptes à injecter un produit de traitement en au moins un point d'au moins une boucle de recyclage.

20. Installation selon l'une des revendications 12 à 19 **caractérisé en ce que** le chenal est rectiligne.

21. Installation selon l'une au moins des revendications 12 à 19 **caractérisé en ce que** le bassin comporte une succession de chicanes conférant au chenal une configuration non rectiligne dite « en chicanes ».

**Patentansprüche**

1. Verfahren zum Filtrieren von flüssigen Medien, beispielsweise, aber nicht einschränkend, von Oberflächenwässern, bestehend aus: mindestens einen Filterschritt in einer Filtermasse (MF) mit der Höhe ($h_1$) in einer Rinne durchzuführen, wobei die genannte Filtermasse in einem Becken mit größerer Höhe (H) als ($h_1$) enthalten ist, und wobei die genannte Filtermasse völlig eingetaucht ist, **dadurch gekennzeichnet, dass**:

- im Wesentlichen noch nicht behandeltes rohes Wasser (EB) an einem Ende, genannt Eingang (E), dieser Rinne und an der Oberfläche der Filtermasse eingespritzt wird, und das behandelte Wasser (ET) im Wesentlichen am anderen Ende, genannt Ausgang (S), dieser Rinne entnommen wird, wobei die Stellen des Einspritzens (E) und der Entnahme (S) an der Oberfläche der Filtermasse eine Oberflächenflüssigkeitsschicht (N) mit der Höhe ($h_2$) erzeugen, die eine Horizontalbewegung ($F_1$) in Richtung des Eingangs (E) zum Ausgang (S) ausführen kann,
- entlang der Rinne in der eingetauchten Filtermasse mit der Höhe ($h_1$) und eine Aufeinanderfolge von (n) nicht notwendigerweise voneinander getrennten Rezyklierschleifen erzeugt wird, um in der Filtermasse eine Aufeinanderfolge von (n) aneinander grenzenden Filtersäulen (Cn) durch Flüssigkeitsansaugung vom unteren Bereich der Filtermasse und ihre Wiedereinspritzung von außerhalb der Rinne direkt in den Bereich der Oberflächenschicht (N) und bei der entsprechenden Säule hervorzurufen,

um auf diese Weise zwischen dem Eingang und dem Ausgang der Flüssigkeit eine spiralförmige Gesamtbewegung zu erzeugen.

2. Verfahren nach Anspruch 1, **dadurch gekennzeichnet, dass** das behandelte Wasser (ET) auch im Wesentlichen im Bereich der Oberfläche der Filterschicht entnommen wird.

3. Verfahren nach Anspruch 1, **dadurch gekennzeichnet, dass** das behandelte Wasser (ET) im Bereich des Drains im unteren Bereich der letzten Filtersäule entnommen wird.

4. Verfahren nach einem der Ansprüche 1 bis 3, **dadurch gekennzeichnet, dass** mindestens eine physikalisch-chemische Ergänzungsbehandlung an mindestens einem Punkt von mindestens einer Filtersäule oder mindestens einer Rezyklierschleife zwischen dem Eintritt und dem Austritt der Flüssigkeit durchgeführt wird.

5. Verfahren nach Anspruch 4, **dadurch gekennzeichnet, dass** die Ergänzungsbehandlung in einem Einspritzen von mindestens einem Produkt in mindestens eine Rezyklierschleife besteht.

6. Verfahren nach Anspruch 5, **dadurch gekennzeichnet, dass** das eingespritzte Produkt in folgender Gesamtheit ausgewählt wird: Eisenchlorid, Aluminiumsulfat, Polyelektrolyt, Natriumkarbonat, Salzsäure, Aktivkohle in Pulverform, Ozon.

7. Verfahren nach Anspruch 4, **dadurch gekennzeichnet, dass** die Ergänzungsbehandlung in der Modifizierung des gesamten oder eines Teils des Materials von mindestens einer Filtersäule besteht.

8. Verfahren nach Anspruch 7, **dadurch gekennzeichnet, dass** die Ergänzungsbehandlung darin besteht, den Sand durch ein aus folgender Liste ausgewähltes Material zu ersetzen: Kalkstein, Aktivkohle in Körnerform, Zeolith.

9. Verfahren nach Anspruch 7, **dadurch gekennzeichnet, dass** die Modifizierung des Materials in der betreffenden Säule in der Aufbringung einer Schicht Aktivkohle in Pulverform besteht, wobei die genannte Schicht eine variable Höhe aufweisen kann.

10. Verfahren nach einem der Ansprüche 1 bis 9, **dadurch gekennzeichnet, dass** nach Beenden des Filterverfahrens ein Waschen der verstopften Zonen mit einem Wasserstrahl unter Druck durchgeführt wird und zwar fortschreitend vom Ausgang der Rinne bis zum Eingang, wobei die Waschwässer durch einen Abfluss am Eingang der Rinne frei und durch Schwerkraft abzuziehen.

11. Verfahren nach einem der Ansprüche 1 bis 9, **durch gekennzeichnet, dass** nach Beenden des Verfahrens ein Waschen mit Gegenstrom durchgeführt wird.

12. Anlage zum Filtrieren von flüssigen Medien, beispielsweise, allerdings nicht einschränkend, von Oberflächenwässern, wobei die Filterung darin besteht , mindestens einen Filterschritt in der Rinne einer Filtermasse (MF) mit der Höhe ($h_1$) durchzuführen, die in einem Bekken mit größerer Höhe (H) als ($h_1$) enthalten ist, wobei die genannte Filtermasse völlig eingetaucht ist, **dadurch gekennzeichnet, dass** die Anlage umfasst:

    - ein Becken (1), das in eine Rinne (2) und eine Gegenrinne (3) unterteilt ist, die voneinander durch mindestens eine Längswand (4) des Bekkens getrennt sind, wobei die Rinne dazu vorgesehen ist, die Filtermasse (MF) zu enthalten, und die Gegenrinne dazu vorgesehen ist, n Rezykliermittel (Mi) (mit 0<i≤n) zu enthalten, wobei eine Vielzahl von Drainausgängen auf der Länge der Rinne verteilt sind;
    - einen Eingang (E) an einem Ende der Rinne mit Mitteln, die das Rohwasser (EB) über der Höhe ($h_1$) einspritzen und an der Oberfläche der Filtermasse eine Flüssigkeitsschicht (N) erzeugen können;
    - in Verbindung mit jedem Drainausgang ein Rezykliermittel ($M_i$), das das abgeleitete Wasser oben an der Filtersäule und über der Höhe ($h_1$) wieder einspritzen kann,
    - einen Ausgang (S) für das behandelte Wasser (ET) am anderen Ende der Rinne, der in der Flüssigkeitsschicht (N) eine Horizontalbewegung vom Eingang (E) zum Ausgang (S) hervorrufen kann.

13. Anlage nach Anspruch 12, **dadurch gekennzeichnet, dass** der Ausgang (S) für das behandelte Wasser auf Höhe der Schicht (N) angeordnet ist.

14. Anlage nach Anspruch 12, **dadurch gekennzeichnet, dass** der Ausgang (S) für das behandelte Wasser auf Höhe des Drains der letzten Filtersäule angeordnet ist.

15. Anlage nach einem der Ansprüche 12 bis 14, **da-**

**durch gekennzeichnet, dass** nach einer ersten Variante der Rezykliermittel:

    - eine Pumpe (Pi) direkt auf einem oder einer Gruppe von Drains (Di) eingebaut ist, wobei der oder die Drains, die unten in der Wanne angeordnet und mit Sand bedeckt sind, durch die Wand (4) mittels eines dichten Anschlusses hindurchgehen und sich außerhalb derselben.durch ein dichtes Rohr, das an den oder die Drains angeschlossen ist, bis zum Einlass der Pumpe verlängern, deren Druckanschluss in der Oberflächenschicht (N) vorgesehen ist,
    - ein Druckfühler und/oder Durchflussmesser die Funktion der Pumpe überprüft.

16. Anlage nach einem der Ansprüche 12 bis 14, **dadurch gekennzeichnet, dass** nach einer zweiten Variante der Rezykliermittel:

    - der Boden jedes Abteils der Gegenrinne jeweils einen Aufnahmebehälter für die abgeleiteten Wässer bildet,
    - von diesem Behälter ein Pumpmittel (Tauchpumpe, die im Behälter eingesetzt wird, oder Trockenkielpumpe, die das Wasser aus dem Behälter entnimmt) das abgeleitete Wasser wieder in die Schicht (N) einspritzt, wobei die genannte Pumpe zwischen zwei Sollpunkten funktioniert.

17. Anlage nach einem der Ansprüche 12 bis 14, **dadurch gekennzeichnet, dass** nach einer dritten Variante der Rezykliermittel:

    - ein Airlift direkt an einem oder einer Gruppe von Drains (Di) eingebaut ist, wobei der oder die Drains, die unten in der Wanne angeordnet und mit Sand bedeckt sind, an eine vertikale Wassersäule angeschlossen sind, die in ihrem oberen Teil mit der Oberflächenschicht (N) verbunden ist.

18. Anlage nach einem der Ansprüche 12 bis 17, **dadurch gekennzeichnet, dass** sie ferner Mittel umfasst, um ein Behandlungsprodukt zumindest an einem Punkt der Rinne einzuspritzen.

19. Anlage nach einem der Ansprüche 12 bis 18, **dadurch gekennzeichnet, dass** sie ferner Mittel umfasst, die ein Behandlungsprodukt an mindestens einem Punkt von mindestens einer Rezyklierschleife einspritzen können.

20. Anlage nach einem der Ansprüche 12 bis 19, **dadurch gekennzeichnet, dass** die Rinne geradlinig ist.

21. Anlage nach mindestens einem der Ansprüche 12 bis 19, **dadurch gekennzeichnet, dass** das Becken eine Aufeinanderfolge von Schikanen umfasst, die der Rinne eine nicht geradlinige, sondern so genannte "schikanenartige" Ausführung verleiht.

**Claims**

1. Method of filtering liquid media, for example but not limitingly surface water, consisting of operating at least one filtration stage in a filtering mass (MF) of height ($h_1$) in a channel, said filtering mass being contained in a tank and having a height (H) greater than ($h_1$), and said filtering mass being totally immersed, **characterised in that**:

   - the unpurified water not yet treated (EB) is substantially injected at one end, called the inlet (E), of this channel and in the surface of the filtering mass, and the treated water (ET) is substantially extracted at the other end, called the outlet (S), of this channel, the locations for the injection (E) and for the extraction (S) producing, in the surface of the filtering mass, a layer of surface liquid (N) having a height ($h_2$) which is capable of a horizontal movement ($F_1$) in the direction from the inlet (E) towards the outlet (S);
   - along the channel, in the immersed filtering mass of height ($h_1$), and without the need for partitioning, a succession of (n) recycling loops is created to produce, in the filtering mass, a succession of (n) filtering columns (Cn), adjacent one another, by sucking-up liquid from the bottom of the filtering mass and reinjecting it through the exterior of the channel directly at the level of the surface layer (N) and in the corresponding column,

   so as to generate, between the inlet and the outlet for the liquid, an overall spiral movement.

2. Method according to claim 1, **characterised in that** the treated water (ET) is also extracted substantially at the level of the surface of the filtering layer.

3. Method according to claim 1, **characterised in that** the treated water (ET) is extracted at the level of the drain at the bottom of the last filtering column.

4. Method according to one of claims 1 to 3, **characterised in that** at least one complementary physico-chemical treatment is effected at at least one point of at least one filtering column or of at least one recycling loop between the inlet and the outlet for the liquid.

5. Method according to claim 4, **characterised in that** the complementary treatment consists in an injection of at least one product into at least one recycling loop.

6. Method according to claim 5, **characterised in that** the injected product is selected from the group (ferric chloride, aluminium sulphate, polyelectrolyte, soda, hydrochloric acid, powdered active carbon, ozone).

7. Method according to claim 4, **characterised in that** the complementary treatment consists in modifying all or part of the material for at least one filtering column.

8. Method according to claim 7, **characterised in that** the complementary treatment consists of replacing the sand by a material selected from the list (limestone, granulated active carbon, zeolite).

9. Method according to claim 7, **characterised in that** the modification of the material consists, in the column involved, in the deposit of a layer of powdered active carbon, said layer being able to have a variable height.

10. Method according to one of claims 1 to 9, **characterised in that**, after stopping the filtration method, a washing process with a pressurised jet of water for the blocked zones is carried out, and progressively from the outlet of the channel towards the inlet to remove the washing water by a free and gravitational flow provided at the inlet of the channel.

11. Method according to one of claims 1 to 9, **characterised in that** a counter-current washing process is carried out after the method is stopped.

12. Installation for filtering liquid media, for example but not limitingly surface water, consisting of operating at least one filtration stage in the channel of a filtering mass (MF) of height ($h_1$) contained in a tank of height (H) greater than ($h_1$), said filtering mass being totally immersed, **characterised in that** it includes:

   - a tank (1), partitioned to form a channel (2) and a counter-channel (3) separated from each other by at least one longitudinal partition (4) of the tank, the channel being provided to contain the filtering mass (MF), and the counter-channel being provided to contain n recycling means (Mi) (with $o < i \leq n$) with a plurality of drain outlets distributed over the length of the channel;
   - an inlet (E) at one end of the channel with means suitable for injecting the unpurified water (EB) above the height ($h_1$) and for producing a layer of liquid (N) in the surface of the filtering mass;
   - associated with each drain outlet, a recycling means ($M_1$) capable of reinjecting the drained water at the top of the filtering column and above the level ($h_1$); and
- an outlet (S) for treated welter (ET) at the other end of the channel, capable of producing, in the layer of liquid (N), a horizontal movement from the inlet (E) towards the outlet (S).

13. Installation according to claim 12, **characterised in that** the outlet (S) for treated water is situated at the level of the layer (N).

14. Installation according to claim 12, **characterised in that** the outlet (S) for treated water is situated at the level of the drain of the last filtering column.

15. Installation according to one of claims 12 to 14, **characterised in that**, according to a first variant of the recycling means:

- a pump (Pi) is implanted directly on one drain or an assembly of drains (Di), the drain or drains, placed at the bottom of the tank and covered with sand, traversing the wall (4) through a tightly sealed connection and extending to the exterior of said wall by a tightly sealed pipe connected to the drain or drains and as far as the inlet of said pump, the discharge of which is situated in the surface layer (N); and
- a pressure and/or the operation of the pump.

16. Installation according to one of claims 12 to 14, **characterised in that**, according to a second variant of the recycling means:

- the base of each compartment of the counter-channel each forms a reservoir for the drained water; and
- from this reservoir, a pumping means (immersed pump operated in the reservoir or a dry dock pump skimming-off the water in the reservoir) reinjects the drained water into the layer (N), said pump operating between two deposit points.

17. Installation according to one of claims 12 to 14, **characterised** [in that]*, according to a third variant of the recycling means:

- an air lift is implanted directly on a drain or an assembly of drains (Di), the drain or drains placed at the bottom of the tank and covered with sand being connected to a vertical column of water which is in connection, in its upper portion, with the surface layer (N).

18. Installation according to one of claims 12 to 17, **characterised in that** it also includes means capable of injecting a treatment product into at least one point of the channel.

19. Installation according to one of claims 12 to 18, **characterised in that** it also includes means capable of injecting a treatment product into at least one point of at least one recycling loop.

20. Installation according to one of claims 12 to 19, **characterised in that** the channel is rectilinear.

21. Installation according to at least one of claims 12 to 19, **characterised in that** the tank includes a succession of zigzags providing the channel with a non-rectilinear configuration called a "zigzag" configuration.

## FIG. 1a

$P_i, M_i$

$P_1$   $P_2$   $P_3$   $P_4$   $P_x$   $P_n$

EB → E

$\vec{F_1}$

$\vec{F_1}$

S → ET   $\ell$

A

A'

N

L

## FIG. 1b

N

EB → E   ZI   ZI   $\vec{F_1}$   ZI   ZI   ZI   S → ET   $h_3$

$\vec{F_2}$   ZF   ↓   $\vec{F_2}$ ZF   ↓ ZF   ↓ ZF   ↓ ZF   $h_2$   H

$h_1$

ZD   ZD   ZD   ZD   ZD

MF

Ci  0<i<n

L

## FIG. A

b

a

## FIG. B

b

a

b

a

b

a

n

## FIG. 2

$M_i$ avec $0 < i \ll n$

## FIG. 3

## FIG. 4